Europäisches Patentamt

European Patent Office

Office européen des brevets

(11) Veröffentlichungsnummer: **0 284 745 B1**

(12) **EUROPÄISCHE PATENTSCHRIFT**

(45) Veröffentlichungstag der Patentschrift: **28.10.92**

(21) Anmeldenummer: **88101951.7**

(22) Anmeldetag: **10.02.88**

(51) Int. Cl.⁵: **B23B 51/08**, B23B 31/02

(54) **Kupplung zwischen einem Werkzeugkopf und einem Werkzeugträger.**

(30) Priorität: **26.03.87 DE 3709878**

(43) Veröffentlichungstag der Anmeldung:
**05.10.88 Patentblatt 88/40**

(45) Bekanntmachung des Hinweises auf die
Patenterteilung:
**28.10.92 Patentblatt 92/44**

(84) Benannte Vertragsstaaten:
**CH DE ES FR GB IT LI**

(56) Entgegenhaltungen:
EP-A- 0 202 211
DE-A- 2 461 750
DE-A- 3 108 438
US-A- 1 475 514
US-A- 2 739 496

(73) Patentinhaber: **GOTTLIEB GÜHRING KG**
**Herderstrasse 50-54**
**W-7470 Albstadt 1-Ebingen(DE)**

(72) Erfinder: **Reinauer, Josef**
**Weidenweg 23**
**W-7480 Sigmaringen(DE)**

(74) Vertreter: **Winter, Konrad Theodor, Dipl.-Ing.**
**et al**
**Patentanwälte Kuhnen, Wacker & Partner**
**Postfach 1553 Alois-Steinecker-Strasse 22**
**W-8050 Freising 1(DE)**

**Beschreibung**

Die Erfindung bezieht sich auf eine Kupplung zwischen einem Werkzeugkopf und einem Werkzeugträger gemäß dem Oberbegriff des Patentanspruchs 1.

Es sind bereits eine Vielzahl von Kupplungen zwischen einem Werkzeugkopf und einem Werkzeugträger bekannt geworden, und zwar insbesondere zum Verbinden eines Bohrkopfs mit einem Werkzeugschaft. Eine derartige Verbindung ist dann vorteilhaft, um eine optimale Materialwahl für das eigentliche Schneidenteil und für den Schneidenträger treffen zu können. In einer aus dem Dokument EP 0 202 211 A2 bekannten Anordnung wird z. B. eine Steckverbindung zwischen einer Schneidspitze und einem Schneidenträger verwendet, bei der eine Ausnehmung und ein entsprechender Zentriervorsprung ineinandergefügt und die Teile unter Zuhilfenahme zweier axialer Spannschrauben gegeneinander gespannt werden. Die Spannschrauben werden ebenfalls dazu benutzt, mit ihrem Schaft zur Übertragung des Drehmoments beizutragen. Hierzu findet in der für den Schraubenschaft vorgesehenen Lochleibung auf seiten der Schneidspitze eine Paß-Buchse aus fließfähigem Material Anwendung, die sich an die Kontur der Spannschraube und an die Lochleibung anschmiegen kann.

Eine auf dem Markt verhältnismäßig weit verbreitete, ähnliche Verbindungsanordnung ist beispielsweise aus dem Prospekt "Komet", Ausgabe 6/86 bekannt. Zur Verbindung des als Bohrkopf ausgebildeten Werkzeugkopfs mit einem Werkzeugschaft wird das Zapfen-Schaftteil in die Aufnahme koaxial eingesetzt und mittels zweier, quer zur Längsrichtung des Werkzeugträgers verlaufender Schrauben, d.h. einer Spannschraube und einer Kegelschraube, miteinander verspannt. Weil hierbei quer zum Werkzeugschaft gerichtete Schraubenkräfte in zur Werkzeugschaft-Längsachse parallele Spannkräfte umgesetzt werden, ist an der Verbindungsstelle ein verhältnismäßig komplizierter räumlicher Spannungszustand vorhanden, so daß eine gleichmäßige Spannungsverteilung über die Kontaktfläche schwer zu erzielen ist. Darüber hinaus kann die Höhe der axial gerichteten Spannkraft nur schwer exakt dosiert werden, so daß es zu einem Überdrehen der Schraubverbindung bzw. einer zu geringen Verspannung der zu verbindenden Teile kommen kann. Im übrigen ist zur Vermeidung einer Relativverdrehung zwischen dem Werkzeugschaft und dem Bohrkopf ein weiteres Bauteil in Form eines exzentrisch angeordneten Positionierstiftes erforderlich, wodurch die Anzahl der Bauteile weiter angehoben wird. Schließlich liegen im bekannten Fall die Betätigungsschrauben jeweils derart an der Oberfläche des Werkzeugschaftes, daß sie im Einsatz des Werkzeugs, d.h. bei spanender Bearbeitung eines Werkstücks, mit Spänen und anderen Verunreinigungen unmittelbar in Kontakt gelangen. Hierdurch unterliegen sie nicht nur einem erhöhten Abrieb, sondern es kann beim Eindringen von feinen Spänen bzw. von Metallstaub in die Gewindeabschnitte der Schrauben sogar zu einer allmählichen Zerstörung der Gewinde kommen.

Aus dem Dokument US-A-1 475 514 ist auch eine Kupplung zwischen einem Werkzeugkopf und einem Werkzeugträger bekannt geworden, bei der der Werkzeugkopf und der Werkzeugträger mittels einer Steckverbindung in Form einer Ausnehmung und eines Vorsprungs koaxial ineinandergesteckt und mittels eines Befestigungsbolzen miteinander verspannt sind. Die axiale Verspannung erfolgt über ein Konusflächenpaar, wobei die Befestigungs-Bolzenanordnung in der Konusausnehmung des Werkzeugträgers sitzt und zu beiden Seiten eines zylindrischen, im Durchmesser vergrößerten Stellteils zwei Gewindebolzenabschnitte unterschiedlichen Gewindesinns trägt, die mit entsprechenden, zentralen Gewindebohrungen auf seiten des Werkzeugkopfs einerseits und des Werkzeugträgers andererseits in Eingriff stehen. Zur Verdrehung der Befestigungs Bolzenanordnung ist der Konus-Hohlschaft mit einer in Umfangsrichtung verlaufenden Ausnehmung auszustatten, durch die ein geeignetes Werkzeug eingeführt werden kann.

Zur teilweisen Beseitigung der oben angesprochenen Probleme bezüglich der Verringerung des konstruktionstechnischen Aufwandes und des für die Spannung erforderlichen Bauraums ist aus der US-PS 4 557 642 eine Kupplung zwischen einem Werkzeugkopf und einem Werkzeugträger gemäß dem Oberbegriff des Patentanspruchs 1 bekannt geworden. Auch hierbei werden die beiden zu kuppelnden Teile koaxial ineinandergesteckt und mittels eines axial ausgerichteten Befestigungsbolzens, der zwei axial versetzte Gewindeabschnitte unterschiedlicher Steigung aufweist, miteinander verspannt. Dies erfolgt deshalb, um eine Verbindung für ein modular aufgebautes Werkzeugwechselsystem zu schaffen, bei dem zentrale Spannmittel verwendet werden, die von der Werkzeugträgerseite aus, d.h. durch eine zentrale Öffnung in einem Spannkonus betätigt werden können. Mittels des Befestigungsbolzens erfolgt ein Zusammenpressen der beiden Teile in axialer Richtung. Um die beiden zu kuppelnden Teile gegen Relativverdrehung zu sichern, ist ein separater Stift vorgesehen, der sich über eine Radialringflächenpaarung der zu kuppelnden Bauteile hinweg erstreckt. Somit sind auch im bekannten Fall unterschiedlich gestaltete Komponenten erforderlich, um in axialer Richtung und in Umfangsrichtung wirkende Kräfte gleichermaßen zuverlässig aufzunehmen.

Zwar offenbart das Bohrwerkzeug gemäß DE-PS 3 108 438 die Verwendung von axial verlaufenden Zentrier- und Mitnehmerstiften. Der Zentrier- und Mitnehmerstift wird jedoch nach dem Einschrauben nicht mehr in axialer Richtung bewegt, so daß bereits beim Ansetzen auf eine genaue Ausrichtung der zu kuppelnden Teile geachtet werden muß. Damit diese Zentrier- und Mitnehmerstifte auch dazu herangezogen werden können, axiale Spannkräfte zwischen den zu kuppelnden Teilen zu erzeugen, sind darüber hinaus zusätzliche Mittel in Form von speziell gestalteten Madenschrauben und Haltestiften erforderlich, wodurch der Aufbau der Kupplung komplizierter wird.

Der Erfindung liegt deshalb die Aufgabe zugrunde, eine Kupplung zwischen einem Werkzeugkopf und einem Werkzeugträger zu schaffen, die in möglichst einfacher Weise bei genauer Ausrichtung zueinander eine sichere gegenseitige Verspannung der Bauteile gewährleistet, bei der ein komplizierter, räumlicher Spannungszustand an der Verbindungsstelle weitestgehend vermieden ist und die eine schnelle Auswechselbarkeit des Werkzeugkopfes sicherstellt.

Diese Aufgabe wird erfindungsgemäß durch die Kupplung gemäß Patentanspruch 1 gelöst.

Eine Kupplung zwischen einem Werkzeugkopf und einem Werkzeugträger gemäß Anspruch 1 gewährleistet eine schnelle und sichere Auswechselbarkeit eines Werkzeugkopfes, wobei im wesentlichen nur axial gerichtete Spannkräfte auftreten. Durch die Verwendung eines Drehmomentschlüssels sind dabei vorbestimmte Vorspannkräfte erzielbar, wodurch eine an bestimmte Gegebenheiten angepaßte Verbindung zwischen dem Werkzeugkopf und dem Werkzeugträger möglich ist. Mit dem Zentrierabschnitt ist eine genaue Ausrichtung des Werkzeugkopfes bezüglich des Werkzeugträgers erreichbar, ohne die schnelle Auswechselbarkeit des Werkzeugkopfes zu beeinträchtigen. Damit eignet sich die Kupplung im besonderem Maße für die Verbindung von Präzisionswerkzeugköpfen mit Universalschäften von Werkzeugmaschinen. Die Positioniergenauigkeit der Schneiden des Werkzeugkopfes läßt sich dabei mit einem Paar diametral gegenüberliegender Zentrierabschnitte in den $\mu$m-Bereich steigern.

Durch eine Anordnung des Befestigungsbolzens gemäß Anspruch 2 ist dieser weitestgehend vor dem Eindringen von Verunreinigungen geschützt. Wenn darüberhinaus die Bohrung, über die der Befestigungsbolzen zugänglich ist, von einer Kühlkanalbohrung gebildet ist, kann ein Eindringen von Verunreinigungen vollständig vermieden werden, da die Kühlkanalbohrung bei Betrieb ständig durchströmt ist. Des weiteren ist durch diese Kühlung ein Festbrennen der Gewinde des Befestigungsbolzens infolge einer Überhitzung wirkungsvoll verhindert.

Die Anordnung des Dichtungselementes gemäß Anspruch 9 stellt sicher, daß an der Verbindungsstelle zwischen dem Werkzeugkopf und dem Werkzeugträger kein Kühlmittel oder ein sonstiges, im Inneren befindliches Fluid unbeabsichtigterweise austreten kann.

Weitere Ziele, Anwendungen und Vorteile der Erfindung werden aus der folgenden ausführlichen Beschreibung eines bevorzugten Ausführungsbeispiels unter Bezugnahme auf die beigefügten Zeichnungen vollständig ersichtlich.

Figur 1    zeigt eine Kupplung zwischen einem Werkzeugkopf und einem Werkzeugträger in Schnittdarstellung gemäß einem Ausführungsbeispiel der Erfindung, wobei die Figur 1b den gelösten Zustand und die Figur 1a den zusammengebauten Zustand der Kupplung zeigt,

Figur 2    zeigt eine Aufsicht auf die Kupplung gemäß Figur 1,

Figur 3    zeigt eine Seitenansicht des Werkzeugträgers in Richtung der Pfeile I in Figur 1 und

Figur 4    zeigt eine Seitenansicht des Werkzeugkopfes in Richtung des Pfeils II in Figur 1.

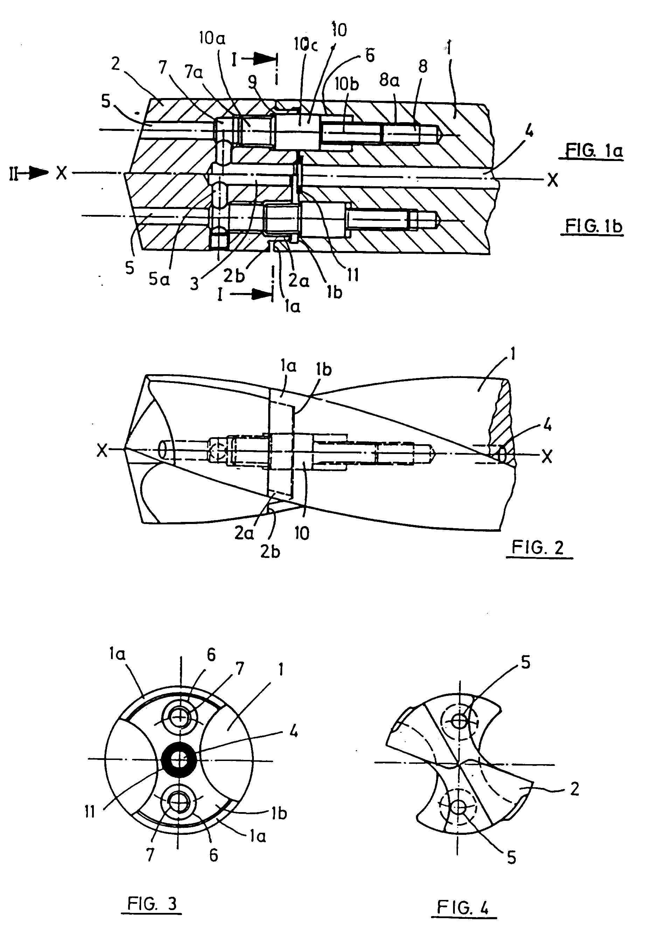

Gemäß den Figuren weist ein Werkzeugträger in Form eines Spiralenkörpers 1 eine im wesentlichen zylindrische Form auf und besteht aus einem metallischen Werkstoff, bevorzugterweise aus Stahl. Der Spiralenkörper 1 ist dabei mit spiralenförmigen Nuten versehen. Entlang seiner Längsachse X-X ist eine Mittelbohrung 4 ausgebildet, über die bei Betrieb ein Kühlmittel zugeführt wird. An seinem gemäß Figur 1 linken Ende weist der Spiralenkörper 1 eine Ausnehmung 1b auf, die von Ringsegmentabschnitten 1a begrenzt ist.

Ein Werkzeugkopf in Form eines Spiralenkopfes 2, der an seinem gemäß Figur 1 linksseitigen Ende mit Bohrschneiden oder ähnlichem versehen sein kann und ebenfalls aus einem metallischen Werkstoff, etwa Stahl oder einem Hartmetall, besteht, weist zwei diametral gegenüberliegend angeordnete Kühlkanalbohrungen 5 auf, die parallel zur Längsachse X-X verlaufen und mittels eines Querkanals 5a untereinander und mit einer Mittelbohrung 3 in Verbindung stehen. An seinem dem Spiralenkörper 1 zugewandten Ende weist der Spiralenkopf 2 eine Abstufung 2a auf, die in ihrer Form an die Ausnehmung 1b angepaßt ist. Auf diese Weise ist der Spiralenkopf 2 mit seiner Abstufung 2a in die Ausnehmung 1b des Spiralenkörpers 1 einsetzbar, wobei dessen Ringsegmentabschnitte 1a in Anlage mit einer Anlagefläche 2b des Spiralenkopfs 2 geraten. Wenn der Spiralenkopf 2 in den Spiralenkörper 1 eingesetzt ist, befinden sich die Mittelbohrungen 3 und 4 in Fluchtung miteinander, so daß die Mittelbohrung 4 über die Mittelbohrung 3 und den Querkanal 5a mit den Kühlmittelbohrungen 5 in Verbindung steht. Zwischen dem Spiralenkörper 1 und dem Spiralenkopf 2 kann zu Dichtungszwecken um die Mittelbohrungen 4 bzw. 5 herum ein Dichtungselement 11 angeordnet sein.

In dem Spiralenkopf 2 ist jeweils in Fluchtung mit den Kühlkanalbohrungen 5 eine erste Bohrung 7 ausgebildet, die mit einem ersten Gewinde 7a in Form eines Innengewindes versehen ist. Demgemäß ist der Spiralenkopf 2 von Bohrungen, die von den in Fluchtung befindlichen ersten Bohrungen 7 und den Kühlkanalbohrungen 5 gebildet sind, durchdrungen. Die Lage der Achse der Kühlkanalbohrung 5 und der ersten Bohrung 7 ist derart gewählt, daß die erste Bohrung 7 im wesentlichen im Zentrum des Bohrersteges (Figur 3) auf der dem Werkzeugträger 1 zugewandten Seite austritt und die Kühlkanalbohrung 5 von einer Freifläche des Werkzeugkopfes 2 ausgeht. Auf der dem Spiralenkörper 1 zugewandten Seite ist die erste Bohrung 7 mit einem gewindelosen Abschnitt größeren Durchmessers, d.h. einer Aufweitung 9 versehen.

In dem Spiralenkörper 1 sind zwei zweite Bohrungen 8 ausgebildet, die parallel zur Längsachse X-X verlaufen und mit einem zweiten Gewinde 8a in Form eines Innengewindes versehen sind. Auf der dem Spiralenkopf 2 zugewandten Seite ist die zweite Bohrung 8 mit einem gewindelosen Abschnitt größeren Durchmessers, d.h. einer Aufweitung 6 versehen. Der Durchmesser der Aufweitung 6 entspricht dabei dem Durchmesser der Aufweitung 9. Wenn der Spiralenkopf 2 in die Ausnehmung 1b des Spiralenkörpers 1 eingesetzt ist, befinden sich die Kühlkanalbohrungen 5, die ersten Bohrungen 7, die Aufweitungen 6 und 9 sowie die zweiten Bohrungen 8 in Fluchtung miteinander. Die ersten und zweiten Gewinde 7a bzw. 8a sind dabei als gleichgängige Gewinde ausgebildet, die eine unterschiedliche Gewindesteigung aufweisen.

Eine Spannschraube bzw. ein Befestigungsbolzen 10 weist einen ersten Außengewindeabschnitt 10a, einen zweiten Außengewindeabschnitt 10b und einen Bolzen- bzw. Zentrierabschnitt 10c auf. Die Spannschraube 10 ist mit dem ersten Außengewindeabschnitt 10a in die erste Bohrung 7 und mit dem zweiten Außengewindeabschnitt 10b in die zweite Bohrung 8 einschraubbar. Des weiteren ist der Durchmesser des Bolzenabschnitts 10c an den Durchmesser der Aufweitungen 6 und 9 angepaßt.

Mittels der Spannschraube 10 wird der Spiralenkopf 2 auf dem Spiralenkörper 1 in nachfolgend beschriebener Weise festgespannt:
Die Spannschraube 10 wird im gelösten Zustand der Kupplung in den Spiralenkörper 1 über den Eingriff des zweiten Außengewindeabschnittes 10b in das zweite Gewinde 8a der zweiten Bohrung 8 eingeschraubt, wobei der Bolzenabschnitt 10c in der Aufweitung 6 spielfrei aufgenommen ist. Dann wird der Spiralenkopf 2 mit der Abstufung 2a in die Ausnehmung 1b des Spiralenkörpers 1 eingesetzt, wobei zwischen dem Spiralenkopf 2 und dem Spiralenkörper 1 ein Spalt verbleibt. Dieser Zustand ist in Figur 1b dargestellt.

Über die Kühlkanalbohrung 5 wird ein Werkzeug zum Drehen der Spannschraube 10, beispielsweise ein Imbusschlüssel, eingeführt, das mit der Spannschraube 10 in geeigneter Weise in Wirkverbindung treten kann. Durch Drehen der Spannschraube 10 wird diese einerseits aus der zweiten Bohrung 8 heraus- und andererseits in die erste Bohrung 7 hineingeschraubt, wobei der Bolzenabschnitt 10c der Spannschraube 10 derart in den Aufweitungen 6 und 9 verschoben wird, daß er teilweise in der Aufweitung 6 und teilweise in der Aufweitung 9 aufgenommen ist, wodurch er eine Zentrierwirkung ausübt. Da das erste und das zweite Gewinde 7a und 8a bzw. der erste und der zweite Außengewindeabschnitt 10a und 10b eine unterschiedliche Gewindesteigung aufweisen, wobei die Gewindesteigung des ersten Gewindes 7a größer als die Gewindesteigung des zweiten Gewindes 8a ist, werden der Spiralenkopf 2 und der Spiralenkörper 1 aufeinander zu bewegt. Nach Anlage der Ringsegmentabschnitte 1a an die Auflagenfläche 2b werden der Spiralenkopf 2 und der Spiralenkörper 1 gegeneinander verspannt, wodurch sie in ihrer gegenseitige Lage fixiert sind. Dabei stützen sie sich in axialer Richtung über die Ringsegmentabschnitte 1a bzw. die Auflagefläche 2b ab. Der zusammengebaute Zustand der Kupplung ist in Figur 1a dargestellt. Dabei ist zu erkennen, daß da Dichtungselement 11 aufgrund der herrschenden Spannkräfte in seiner Lage fixiert ist und daß der Bolzenabschnitt 10c aufgrund seiner Lage im zusammengebauten Zustand den Spiralenkopf 2 und den Spiralenkörper 1 gegenseitig zentriert.

Mittels der Wahl geeigneter, unterschiedlicher Gewindesteigungen der gleichgängigen Gewinde ist es möglich, Übersetzungen gewünschter Größe zu erzielen. Im befestigten Zustand wirken somit im wesentlichen nur axiale Kräfte und die bei Gebrauch auftretenden Axial- und Torsionskräfte werden durch das gleiche Bauteil aufgenommen, wodurch ein einfacher Kraftfluß und Spannungsverlauf gewährleistet und ein Auftreten komplizierter räumlicher Spannungszustände weitgehend vermieden ist.

Die Kupplung zwischen dem Werkzeugkopf bzw. dem Spiralenkopf und dem Werkzeugträger bzw. dem Spiralenträger ermöglicht ein schnelles und sicheres Auswechseln des Werkzeugkopfes im Bedarfsfall, wobei bei Verwendung eines Drehmomentenschlüssels reproduzierbare Vorspannkräfte erreicht werden können.

Da die Spannschraube nur über die Kanäle zugänglich ist, durch die bei Betrieb ein Kühlmittel fließt und die dadurch ständig gespült sind, ist ein Vordringen von Verunreinigungen oder Metallspänen zur Spannschraube verhindert, wodurch diese nur einem geringen Abrieb bzw. Verschleiß unterliegt.

In Abwandlung des Ausführungsbeispiels ist es möglich, statt zweier Spannschrauben und den entsprechenden Bohrungen eine Vielzahl von Spannschrauben anzuordnen. Dadurch werden die an den einzelnen Spannschrauben auftretenden Kräfte und Spannungen erheblich vermindert, wodurch diese entweder kleiner ausgebildet werden können oder bei Beibehaltung ihrer Größer eine größere Kraft übertragen können.

Eine Kupplung zwischen einem Werkzeugkopf und einem Werkzeugträger weist zur Grobpositionierung eine Aufnahme-Zapfen-Verbindung auf. Mittels zumindest eines in Axialrichtung des Werkzeugträgers verlaufenden Befestigungsbolzens wird der Werkzeugkopf mit dem Werkzeugträger verspannt. Dabei tritt der Befestigungsbolzen über eine erste Gewindeverbindung mit dem Werkzeugkopf und über eine zweite Gewindeverbindung mit dem Werkzeugträger in Eingriff, wobei die erste und die zweite Gewindeverbindung gleichgängige Gewinde unterschiedlicher Steigung aufweisen, so daß bei Anziehen des Befestigungsbolzens der Werkzeugträger und der Werkzeugkopf in Axialrichtung miteinander verspannt werden. Des weiteren weist der Befestigungsbolzen einen Zentrierabschnitt auf, der im zusammengebauten Zustand der Kupplung den Werkzeugkopf bezüglich des Werkzeugträgers zentriert. Der Befestigungsbolzen ist im zusammengebauten Zustand der Kupplung in seiner Gesamtheit im Inneren der aus Werkzeugträger und Werkzeugkopf gebildeten Einheit aufgenommen und nur über eine Bohrung zugänglich. Vorteilhafterweise dient diese Bohrung auch als Kühlkanalbohrung, so daß sie bei Gebrauch von einem Kühlmittel durchströmt ist, wodurch das Eindringen von Verunreinigungen in die Kupplung ausgeschlossen ist.

**Patentansprüche**

1. Kupplung zwischen einem Werkzeugkopf (2) und einem Werkzeugträger (1), wobei der Werkzeugkopf und der Werkzeugträger mittels einer Steckverbindung in Form einer Ausnehmung (1b) und eines Vorsprunges (2) koaxial ineinandergesteckt und mittels zumindest eines Befestigungsbolzens miteinander verspannt sind und wobei der Befestigungsbolzen (10) in Axialrichtung des Werkzeugträgers (1) verläuft und über ein erstes Gewinde (10a) mit dem Werkzeugkopf (2) sowie über ein zweites Gewinde (10b) mit dem Werkzeugträger (1) in Eingriff bringbar ist, wobei die Gewinde (10a, 10b) gleichgängig mit unterschiedlicher Steigung ausgebildet sind, **dadurch gekennzeichnet, daß** der Befestigungsbolzen (10) exzentrisch zur Werkzeugachse angeordnet ist und einen Zentrierabschnitt (10c) aufweist, der zur Zentrierung des Werkzeugträgers (1) bezüglich des Werkzeugkopfes (2) im zusammengebauten Zustand der Kupplung teilweise in einer Aufweitung (6) einer Bohrung (8) des Werkzeugträgers (1) und teilweise in einer Aufweitung (9) einer Bohrung (7) des Werkzeugkopfes (2) spielfrei aufgenommen ist.

2. Kupplung nach Anspruch 1, **dadurch gekennzeichnet, daß** der Befestigungsbolzen (10) im zusammengebauten Zustand der Kupplung in seiner Gesamtheit im Inneren der aus Werkzeugträger (1) und Werkzeugkopf (2) gebildeten Einheit aufgenommen und nur über eine Bohrung (5) zugänglich ist.

3. Kupplung nach Anspruch 2, **dadurch gekennzeichnet, daß** die Bohrung (5) in Axialrichtung des Werkzeugkopfes (2) verläuft.

4. Kupplung nach Anspruch 2 oder 3, **dadurch gekennzeichnet, daß** die Bohrung (5) eine Kühlkanalbohrung ist, die vom Schneidenbereich des Werkzeugkopfs (2) ausgeht.

5. Kupplung nach einem der Ansprüche 2 bis 4, **dadurch gekennzeichnet, daß** die Bohrung (5) bei Gebrauch der aus Werkzeugträger (1) und Werkzeugkopf (2) gebildeten Einheit von einem Fluid durchströmt ist.

6. Kupplung nach einem der Ansprüche 1 bis 5, **dadurch gekennzeichnet, daß** der Werkzeugkopf (2) mit dem Werkzeugträger (1) mittels zweier diametral entgegengesetzt angeordneter Befestigungsbolzen (10) verspannt ist.

7. Kupplung nach einem der Ansprüche 1 bis 6, **dadurch gekennzeichnet, daß** der Werkzeugträger (1) und/oder der Werkzeugkopf (2) aus einem metallischen Werkstoff besteht.

8. Kupplung nach Anspruch 7, **dadurch gekennzeichnet, daß** der Werkzeugträger (1) und/oder der Werkzeugkopf (2) aus Hartmetall besteht.

9. Kupplung nach einem der Ansprüche 1 bis 8, **dadurch gekennzeichnet, daß** zwischen dem Werkzeugträger (1) und dem Werkzeugkopf (2) ein Dichtungselement (11) angeordnet ist.

**10.** Kupplung nach einem der Ansprüche 1 bis 9, **dadurch gekennzeichnet, daß** die Gewindesteigung des ersten Gewindes (10a) größer als die Gewindesteigung des weiteren Gewindes (10b) ist.

## Claims

**1.** A coupling between a tool head (2) and a tool support or carrier (1), the tool head and the tool carrier being coaxially fitted into each other by a plug-in connection in the form of a recess (1b) and a projection (2) and being braced to each other by at least one fastening bolt, and the fastening bolt (10) extending in axial direction of the tool carrier (1) and being engageable with the tool head (2) through a first thread (10a) and with the tool carrier (1) through a second thread (10b), wherein the threads (10a, 10b) have the same sense and different pitches, **characterized in that** the fastening bolt (10) is disposed eccentrically with respect to the tool axis and has a centering portion (10c) which for centering the tool carrier (1) with respect to the toll head (2) in the assembled state of the coupling is received free from play partly in a widening of a bore (8) of the tool carrier (1) and partly in a widening (9) of a bore (7) of the tool head (2).

**2.** A coupling as set forth in claim 1, **characterized in that** the fastening bolt (10) in the assembled state of the coupling is received in its entirety inside of the unit constituted by tool carrier (1) and tool head (2) and is accessible only via a bore (5).

**3.** A coupling as set forth in claim 2, **characterized in that** the bore (5) extends in axial direction of the tool head (2).

**4.** A coupling as set forth in claim 2 or 3, **characterized in that** the bore (5) is a coolant duct bore extending from the cutting edge portion of the tool head (2).

**5.** A coupling as set forth in one of the claims 2 to 4, **characterized in that** upon use of the unit constituted by tool carrier (1) and tool head (2) a fluid flows through said bore (5).

**6.** A coupling as set forth in one of the claims 1 to 5, **characterized in that** the tool head (2) is braced with the tool carrier (1) by two diametrically opposed fastening bolts (10).

**7.** A coupling as set forth in one of the claims 1 to 6, **characterized in that** the tool carrier (1) and/or the tool head (2) consists of a metallic material.

**8.** A coupling as set forth in claim 7, **characterized in that** the tool carrier (1) and/or the tool head (2) consists of hard metal.

**9.** A coupling as set forth in one of the claims 1 to 8, **characterized in that** a sealing member (11) is disposed between the tool carrier (1) and the tool head (2).

**10.** A coupling as set forth in one of the claims 1 to 9, **characterized in that** the pitch of the first thread (10a) is larger than the pitch of the second thread (10b).

## Revendications

**1.** Dispositif d'accouplement entre une tête d'outil (2) et un porte-outil (1), la tête d'outil et le porte-outil étant emboités coaxialement l'un dans l'autre par l'intermédiaire d'une connexion d'embrochage en forme d'un creux (1b) et d'une partie en saillie (2) et étant haubanés par l'intermédiaire d'au moins un boulon de serrage, et le boulon de serrage (10) s'étendant en direction axiale du porte-outil (1) et étant mettable en prise avec la tête d'outil (2) par un premier filet (10a) ainsi qu'avec le porte-outil (2) par un second filet (10b), les filets (10a, 10b) étant formés en meme sens et avec des pas différents, **caractérisé par le fait que** le boulon de serrage (10) est disposé excentriquement par rapport à l'axe d'outil et présente une section de centrage (10c) qui afin de centrer le porte-outil (1) par rapport à la tête d'outil (2) dans l'état assemblé du dispositif d'accouplement est recue sans jeu en partie dans un élargissement (6) d'un alésage (8) du porte-outil (1) et en partie dans un élargissement (9) d'un alésage (7) de la tête d'outil (2).

**2.** Dispositif d'accouplement selon la revendication 1, **caractérisé par le fait que,** dans l'état assemblé du dispositif d'accouplement, le boulon de serrage (10) est reçu totalement dans l'interieur de l'unité formé du porte-outil (1) et de la tête d'outil (2) et n'est accessible que par l'intermédiaire d'un alésage (5).

**3.** Dispositif d'accouplement selon la revendication 2, **caractérisé par le fait que** l'alésage (5) s'étend en direction axiale de la tête d'outil (2).

4. Dispositif d'accouplement selon la revendication 2 ou 3, **caractérisé par le fait que** l'alésage (5) est un alésage de canal de refroidissement qui s'étend de la section de taillant de la tête d'outil (2).

5. Dispositif d'accouplement selon l'une des revendications 2 à 4, **caractérisé par le fait qu'**un fluide coule à travers l'alésage (5), quand on utilise l'unité formé du porte-outil (1) et de la tête d'outil (2).

6. Dispositif d'accouplement selon l'une des revendications 1 à 5, **caractérisé par le fait que** la tête d'outil (2) est haubanée par rapport du porteoutil par l'intermédiaire de deux boulons de serrage (10) diamétralement opposés.

7. Dispositif d'accouplement selon l'une des revendications 1 à 6, **caractérisé par le fait que** le porte-outil (1) et/ou la tête d'outil (2) est fait d'un matériau metallique.

8. Dispositif d'accouplement selon la revendication 7, **caractérisé par le fait que** le porteoutil (1) et/ou la tête d'outil (2) est fait de métal dur.

9. Dispositif d'accouplement selon l'une des revendications 1 à 8, **caractérisé par le fait qu'**un élément d'étanchéité (11) est disposé entre le porteoutil (1) et la tête d'outil (2).

10. Dispositif d'accouplement selon l'une des revendications 1 à 9, **caractérisé par le fait que** le pas de filetage du premier filet (10a) est plus grand que le pas de filetage du second filet (10b).

FIG. 1a

FIG. 1b

FIG. 2

FIG. 3

FIG. 4